# EUROPÄISCHE PATENTSCHRIFT

(11) **EP 2 856 619 B1**
(45) Veröffentlichungstag und Bekanntmachung des Hinweises auf die Patenterteilung: **04.10.2017**
(21) Anmeldenummer: 12747885.7
(22) Anmeldetag: 18.07.2012
(51) Int. Cl.: H02K 11/00, H01H 37/76, H02K 11/02, H02K 5/14

(54) **ELEKTROMOTOR MIT THERMOSCHUTZ**
THERMALLY PROTECTED ELECTRIC MOTOR
MOTEUR ÉLECTRIQUE À THERMOPROTECTION

(30) Priorität: 26.05.2012 DE 102012010483
(43) Veröffentlichungstag der Anmeldung: 08.04.2015
(73) Patentinhaber: Brose Fahrzeugteile GmbH & Co. Kommanditgesellschaft, Würzburg, 97076 Würzburg (DE)
(72) Erfinder: SCHOELE, Rainer, 97274 Leinach (DE); HARTMANN, Frank, 97318 Kitzingen (DE); STOCKMANN, Peter, 97218 Gerbrunn (DE); CAPRISTO III, Frank, 97209 Veitshöchheim (DE)
(74) Vertreter: FDST Patentanwälte
(86) Internationale Anmeldenummer: PCT/EP2012/003017
(87) Internationale Veröffentlichungsnummer: WO 2013/178239

(56) Entgegenhaltungen:
- WO-A1-00/51223
- DE-A1- 1 515 019
- DE-U1-202010 002 664
- US-A1- 2010 142 109

## Beschreibung

Die Erfindung betrifft einen Elektromotor gemäß dem Oberbegriff des Anspruchs 1. Ein derartiger Elektromotor ist aus der DE 20 2010 002664 U1 bekannt. Unter Elektromotor wird hierbei bevorzugt ein solcher zum Antrieb einer Kraftfahrzeugkomponente, insbesondere ein Gleichstrom-Lüftermotor zur Kühlwasserkühlung eines Kraftfahrzeugs, verstanden.

Elektromotorisch betriebene Verstellsysteme von Kraftfahrzeugen, wie beispielsweise Fensterheber, Sitzverstellungen, Tür- und Schiebedachantriebe oder Kühlerlüfterantriebe weisen einen gesteuerten Elektromotor auf, der in der Regel ein Kommutatormotor mit einem mit einer Wicklung versehenen Rotor und mit einem aus Dauermagneten gebildete Stator sowie mit einem Bürstensystem ist, deren Bürsten die Kommutatorlamellen zur Übertragung des Motorstroms in die Rotorwicklung gleitend bestreichen. Zusätzlich zu Entstörelementen ist innerhalb des Bürstensystems häufig eine federbelastete Thermosicherung in Form einer Lotstelle oder-verbindung als Überlastschutz vorgesehen. Bei einem über eine bestimmte Zeit fließenden Überlaststrom wird das Lot aufgeschmolzen, so dass in Folge der Federvorspannung der Thermosicherung eine Leiterbahn spontan unterbrochen wird.

Aus der WO 2011/103947 A1 ist eine Thermosicherung in Form einer Kontaktfeder mit zwei Kontaktarmen bekannt, deren Fixierenden mit jeweils einem Strombahnende einer den Motorstrom führenden Strombahn elektrisch leitend verbunden, die ihrerseits Teil eines kunststoffumspritzten Stanzgitters ist. Zwischen den beiden Strombahnenden der derart in eine elektrische Isolierung eingeprägten Strombahn ist eine Unterbrechungsstelle eingebracht, die von der Kontaktfeder gebrückt ist. Die den Fixierenden gegenüber liegenden Federenden der Kontaktarme der Kontaktfeder sind unter Federvorspannung miteinander verlötet, wobei die Lotverbindung im Überlastfall aufschmilzt und dadurch die Thermosicherung auslöst.

Aus der DE 15 15 019 A1 ist zudem eine modulare Thermosicherung bekannt, welche eine Blattfeder aufweist.

Der Erfindung liegt die Aufgabe zugrunde, einen Elektromotor, insbesondere einen Gleichstrom-Lüftermotor für ein Kraftfahrzeug, der eingangs genannten Art mit einer insbesondere hinsichtlich des Montage- und/oder Materialaufwandes verbesserten Thermosicherung (Thermoschutz) anzugeben.

Diese Aufgabe wird erfindungsgemäß gelöst durch die Merkmale des Anspruchs 1. Vorteilhafte Ausgestaltungen, Weiterbildungen und Varianten sind Gegenstand der Unteransprüche.

Dazu weist der Elektromotor, der insbesondere elektroniklos und in nur einer Drehrichtung betrieben ist, in einem Motorgehäuse einen Rotor mit einem Kommutator auf, an dem mindestens eine Bürste kontaktierend anliegt. Eine Thermosicherung mit einer aus zwei Kontaktarmen mit jeweils einem Fixierende und einem Federende gebildeten Kontaktfeder ist als Sicherungsmodul ausgebildet und weist einen Kunststoffträger auf, in den Strombahnabschnitte derart teilweise eingebettet sind, dass einerseits die Kontaktfeder in einer fensterartigen Trägeröffnung einliegen, und dass andererseits Anschlussenden der Strombahnabschnitt aus dem Kunststoffträger herausragen. Die Fixierenden der Kontaktarme der Kontaktfeder sind mit jeweils einem Strombahnabschnitt kontaktiert, zwischen denen eine Unterbrechungsstelle gebildet ist. Die Federenden der Kontaktarme der Kontaktfeder sind über eine Lotverbindung unter Federvorspannung miteinander kontaktiert.

Die Halterung der Kontaktfeder an den Strombahnabschnitten des Sicherungsmoduls erfolgt geeigneterweise über eine kombinierte Schnapp- oder Rastverbindung einerseits und eine Schweiß- oder Lotverbindung andererseits. Dazu weisen die Kontaktarme der Kontaktfeder jeweils einen im Wesentlichen U-förmigen Basisabschnitt mit zwei über eine mittlere Fixierplatte zueinander beabstandeten Fixierlaschen auf. Die zueinander beabstandeten, federelastischen und abgekröpften Fixierlaschen sind dazu vorgesehen und eingerichtet, im Zuge des Zusammenbaus des Sicherungsmoduls in korrespondierenden Rast- oder Schnappöffnungen des jeweiligen Strombahnabschnittes form- und/oder kraftschlüssig einzurasten. Auf diese Weise sind bereits eine zuverlässige Fixierung und insbesondere eine Positionierung der Kontaktarme im Sicherungsmodul ermöglicht. Für die zusätzliche Schweiß- bzw. Lotverbindung sind in die Fixierplatte des jeweiligen Kontaktarms eine Anzahl von Öffnungen eingebracht, um eine Zuverlässige Entgasung während des Schweiß- bzw. Lötprozesses zu gewährleisten.

Vorzugsweise ist lediglich einer der beiden Kontaktarme der Kontaktfeder abgekröpft, um im verlöteten Zustand der beiden Kontaktarme die Federvorspannung bzw. Rückstellkraft der Kontaktfeder zum Auslösen des Sicherungsmoduls bereit zu stellen. Der andere Kontaktarm ist geeigneterweise im Bereich der Kontaktstelle muldenartig geformt, um das Lot zur Herstellung der Lotverbindung mit dem Federende des unter Erzeugung der Federvorspannung gebogenen Kontaktarms aufzunehmen.

In vorteilhafter Ausgestaltung sind die aus dem Kunststoffträger des Sicherungsmoduls herausragenden Anschlussenden der Strombahnabschnitte zur Herstellung einer Schweiß- oder Lotverbindung mit Bauteilen ausgeführt, die den Motorstrom führen. Dabei ist ein erstes der Anschlussenden dazu vorgesehen und eingerichtet, im Einbauzustand des Sicherungsmoduls mit einer ersten Leiterader einer stromführenden Versorgungsleitung direkt kontaktiert zu werden. Mit anderen Worten stellt dieses erste Anschlussende die Kontaktstelle für die erste Leiterader der den Motorstrom führenden Versorgungsleitung bereit. In dieser Ausführungsform ist das erste Anschlussende im Einbauzustand des Sicherungsmoduls geeigneterweise mit einem ersten Entstörelement, insbesondere mit einem Anschlusspin eines Kondensators, direkt kontaktiert.

Gemäß einer weiteren zweckmäßigen Ausgestaltung weist eine der Strombahnabschnitte des Sicherungsmoduls eine aus dem Kunststoffträger herausragende Anschlussfahne auf, die dazu vorgesehen und eingerichtet ist, eine direkte Masseanbindung zur Gehäusemasse, insbesondere mit einem Gehäusedeckel des Motorgehäuses, herzustellen.

Das (zweite) Anschlussende des anderen Strombahnabschnitts ist geeigneterweise dazu vorgesehen und eingerichtet, im Einbauzustand des Sicherungsmoduls mit einem zweiten Entstörelement, insbesondere mit einem Wicklungsende einer Drosselspule, direkt kontaktiert zu werden.

In einer besonders vorteilhaften Weiterbildung des Sicherungsmoduls sind an dessen Kunststoffträger eine Anzahl von, vorzugsweise zwei oder drei, Rastelementen angeformt. Die Rastelemente sind geeigneterweise in Form von Rasthaken ausgeführt. Diese sind dazu vorgesehen und eingerichtet, mit korrespondierenden Rastelementen, vorzugsweise mit Rastausnehmungen, eines aus Isoliermaterial bestehenden Bürstenträgers zusammenzuwirken und das Sicherungsmodul, d.h. die modulare Thermosicherung innerhalb des Motorgehäuses zu fixieren. Um ein freies Ausfedern des vorgespannten Federendes der Kontaktfeder im Auslösefall der Thermosicherung sicherzustellen, ist die fensterartige Trägeröffnung des Kunststoffträgers der Thermosicherung hinsichtlich deren Längen- und Breitenabmessungen entsprechend ausgestaltet.

Eine weitere Ausgestaltung sieht vor, dass das Sicherungsmodul in der Nähe und dabei vorzugsweise ober- oder unterhalb der Bürste angeordnet ist. Dabei ist das Sicherungsmodul geeigneterweise im Bürstenträger derart angeordnet, dass die Bürste unter- bzw. oberhalb der Unterbrechungsstelle - und damit der Lotverbindung der Federenden der Kontaktfeder des Sicherungsmoduls - angeordnet ist. Hierdurch ist in einfacher sowie zuverlässiger Art und Weise erreicht, dass eine unzulässig oder unerwünscht starke, d. h. intensive Wärmeentwicklung der Bürste zu einem Aufschmelzen der Lotverbinung des im Bürstenträger eingebauten Sicherungsmoduls und damit zum Auslösen der Thermosicherung führt.

Die mit der Erfindung erzielten Vorteile bestehen insbesondere darin, dass durch die Bereitstellung einer nachfolgend auch als Sicherungsmodul bezeichneten modularen Thermosicherung diese als separates Bauteil vorgefertigt werden kann, so dass ein flexibler Einsatz der Thermosicherung bzw. des Sicherungsmoduls als Baugruppe auf einem Bürstensystem eines derartigen Elektromotors gegeben ist. Darüber hinaus ist der Einbau des Sicherungsmoduls wesentlich vereinfacht, zumal an deren in Einbaulage definiert positionierten Anschlussenden eine besonders einfache und fehlersichere Kontaktierung mit dem bestimmungsgemäß vorgesehenen Bauteilen ermöglicht ist. Zudem muss kein materialaufwändiges Stanzgitter zur Stromführung des Motorstroms bereitgestellt werden.

Des Weiteren ermöglichen die Öffnungen in den Fixierlaschen der Kontaktarme der Kontaktfeder eine Entgasung während des Lötprozesses. Ferner ist eine besonders einfache direkte Masseanbindung des Sicherungsmoduls zur Gehäusemasse vermittels der entsprechenden, aus dem Kunststoffträger herausragenden Anschlussfahne ermöglicht. Hierdurch sind Windungs- oder Wicklungs-Kurzschlüsse der Motor- bzw. Rotorwicklung besonders einfach und zuverlässig erkennbar.

Ein derartiges Sicherungsmodul eignet sich daher besonders für den Einsatz in einem Gleichstrom-Elektromotor ohne Steuerelektronik sowie mit nur einer Antriebsrichtung (Drehrichtung) und somit insbesondere für einen Kühlerlüftermotor eines Kraftfahrzeugs. Gerade ein solcher Lüftermotor kann für eine erhöhte Brandgefahr ursächlich sein, zumal dieser für eine erforderliche Kühlwasserkühlung auch dann noch in Betrieb sein kann, wenn das Fahrzeug vom Benutzer bereits abgestellt und verlassen worden ist.

Nachfolgende wird ein Ausführungsbeispiel der Erfindung anhand einer Zeichnung näher erläutert. Darin zeigen:
- Fig. 1: perspektivisch einen Elektromotor mit einem Motorgehäuse und mit einem Stromanschluss,
- Fig. 2: in einer Draufsicht einen ein erfindungsgemäßes Sicherungsmodul tragenden Bürstenträger eines Bürstensystems des Elektromotors gemäß Fig. 1 ohne Motorgehäuse ,

- Fig. 3: in einer Unteransicht das Bürstensystem gemäß Fig. 2 ohne Bürstenträger und mit Masseanbindung des Sicherungsmoduls an einen Gehäusedeckel des Motorgehäuses,
- Fig. 4: das Sicherungsmodul in einer teilweisen Explosionsdarstellung,
- Fig. 5: das Sicherungsmodul in Draufsicht,
- Fig. 6: das Sicherungsmodul in Unteransicht, und
- Fig. 7: ausschnittsweise den Bürstenträger mit Blick auf drei Rastverbindungen des montierten Sicherungsmoduls.

Einander entsprechende Teile sind in allen Figuren mit den gleichen Bezugszeichen versehen.

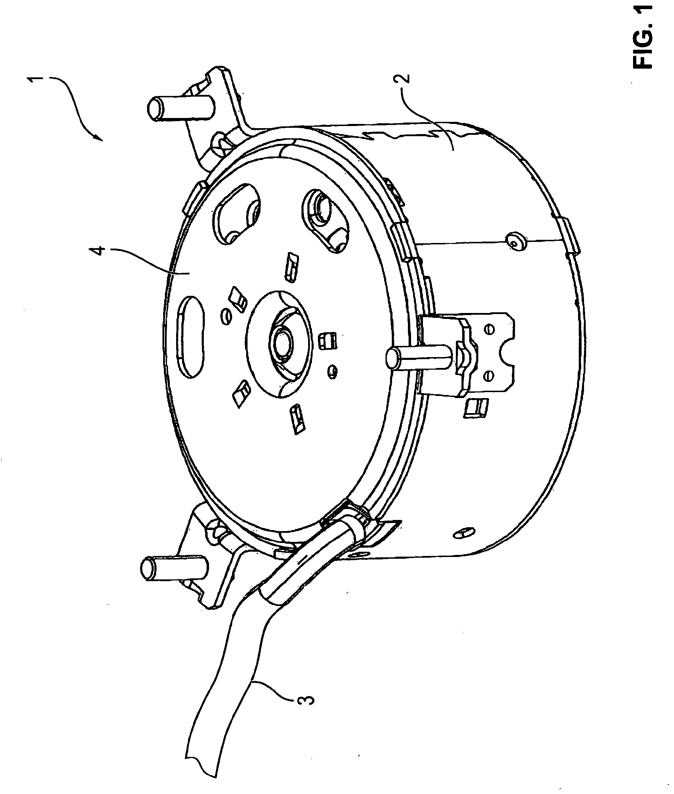

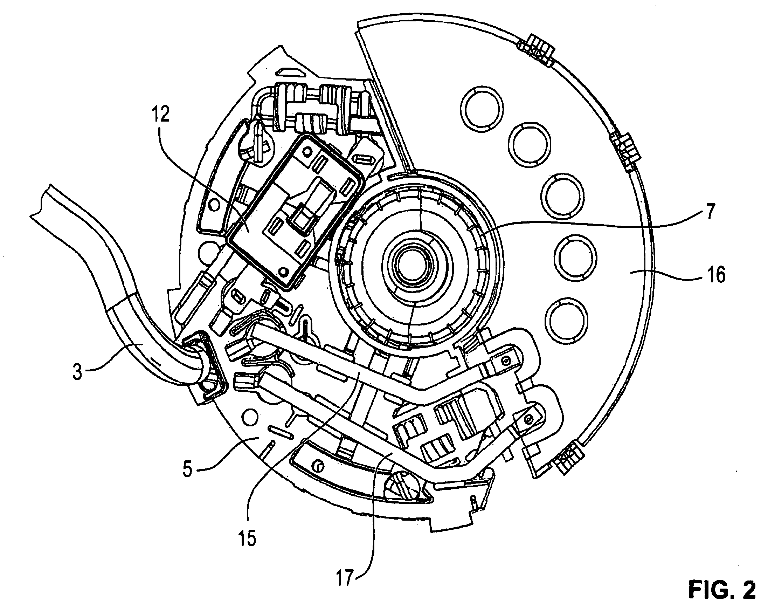

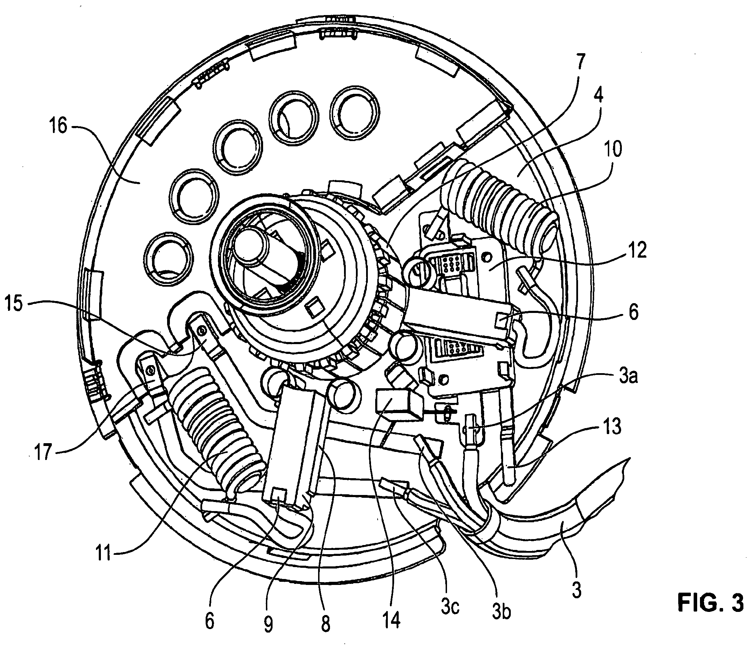

Fig. 1 zeigt einen nachfolgend als Elektromotor bezeichneten elektromotorischen Antrieb 1 mit einem aus Metall bestehenden Motorgehäuse 2 und mit einem elektrischen Versorgungskabel 3, dessen Leitungen (Fig. 2 und 3) in das einen Gehäusedeckel 4 aufweisende Motorgehäuse 2 geführt sind.

In den Fig. 2 und 3 ist ein Bürstensystem des Elektromotors 1 ohne Motorgehäuse in Draufsicht auf einen Bürstenträger 5 (Fig. 2) bzw. mit Blick auf die gegenüberliegenden Unterseite ohne Bürstenträger 5, jedoch mit Gehäusedeckel 4 (Fig. 3) dargestellt. Der Bürstenträger 5 besteht aus einem elektrisch nicht leitenden Werkstoff, insbesondere aus Kunststoff. Auf der Unterseite (Fig. 3) des als Spritzgussteil hergestellten Bürstenträgers 5 sind am Umfang eines nicht näher dargestellten Rotors des Elektromotors 1 zwei Kohlebürsten 6 als Gleitkontakte gegen einen rotorfesten, eine Vielzahl von Kommutatorlamellen aufweisenden Kommutator 7 unter Federvorspannung geführt. Hierzu befinden sich die mittels eines Federelementes 8 vorgespannten Kohlebürsten 6 in einem Bürstenköcher 9.

Die Kohlebürsten 6 sind jeweils mit einer Entstördrossel (Drosselspule) 10, 11 elektrisch leitend verbunden, wobei die mit 10 bezeichnete Entstördrossel über eine nachfolgend als Sicherungsmodul bezeichnete Thermosicherung 12 mit einer der Leitungen 3a des Versorgungskabels 3 verbunden ist. Das Sicherungsmodul 12 weist leiteranschlussseitig einen Masseanschluss 13 auf, der direkt mit dem Gehäusedeckel 4 kontaktiert ist. Das Sicherungsmodul 12 ist leiteranschlussseitig zudem mit einem Anschlusspin eines Kondensators 14 verbunden, dessen anderer Anschlusspin mit einer Strombahn oder-schiene 15 verbunden ist. Diese führt über einen in einem Widerstandsgehäuse 16 angeordneten, nicht sichtbaren Flachwiderstand an eine zweite Stromschiene 17, mit der die Entstördrossel 11 kontaktiert ist. Die Stromschienen 15, 17 sind mit weiteren Leitungen 3b bzw. 3c des Versorgungskabeld 3 verbunden. Der Flachwiderstand wird für eine gestufte Drehzahlregelung des Elektromotors 1 verwendet.

Wie aus Fig. 3 vergleichsweise deutlich ersichtlich ist, ist das Sicherungsmodul 12 in der Nähe und dabei quasi zwischen dem Bürstenträger 5 und der Bürste 6 - also je nach Betrachtung ober- oder unterhalb der Bürste 6 - angeordnet. Dabei ist das Sicherungsmodul 12 derart angeordnet, dass die Bürste 6 unter- bzw. oberhalb der Unterbrechungsstelle 12 - und damit der Lotverbindung der Kontaktfeder 24 - angeordnet ist. Hierdurch ist sichergestellt, dass eine unzulässig hohe Wärmeentwicklung der Bürste 6 zu einem Aufschmelzen der Lotverbinung des im Bürstenträger 5 eingebauten Sicherungsmoduls 12 und somit zum Auslösen der Thermosicherung führt.

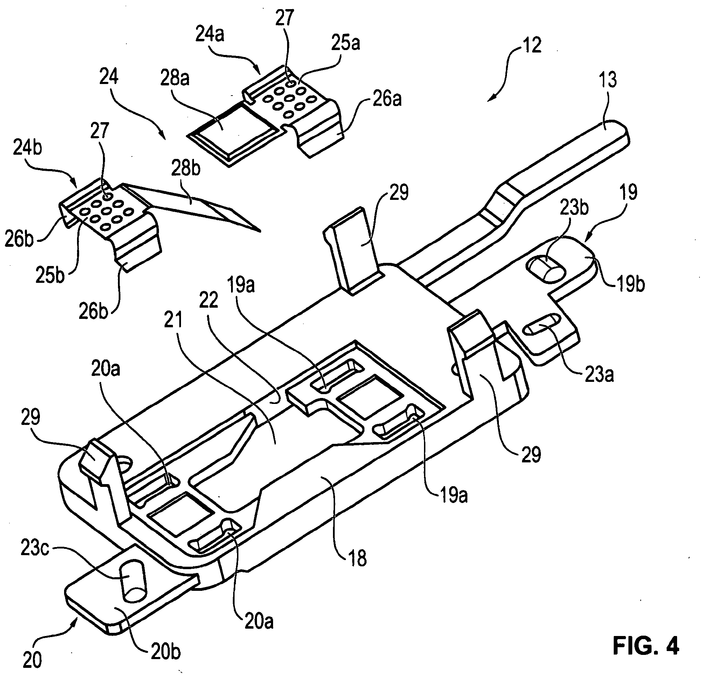

Die Figuren 4 bis 6 zeigen die modulare Thermosicherung, also das Sicherungsmodul 12 in unterschiedlichen Darstellungen. Das Sicherungsmodul 12 umfasst einen Kunststoffträger 18, in den zwei Strombahnabschnitte 19, 20 unter Freilassung bzw. unter Bildung einer Unterbrechungsstelle 21 eingebettet sind. Im Bereich der Unterbrechungsstelle 21 ist im Kunststoffträger 18 eine fensterartige Trägeröffnung 22 frei gelassen. Diese erstreckt sich über einen Teil der Strombahnabschnitte 19, 20 unter Bildung von Rastausnehmungen 19a im Strombahnabschnitt 19 und Rastausnehmungen 20a im Strombahnabschnitt 20.

Der Strombahnabschnitt 20 ragt mit einem Anschlussende 20b aus dem Kunststoffträger 18 heraus. Analog ragt der Strombahnabschnitt 19 mit einem ersten Anschlussende 19b aus dem Kunststoffträger 18 heraus. Parallel hierzu ragt aus dem Kunststoffträger 18 als Masseanbindung eine Anschlussfahne 13 heraus, die ebenfalls Teil des Strombahnabschnittes 19 ist. Im Montagezustand des Sicherungsmoduls 12 im Motorgehäuse 2 und dort auf dem Bürstenträger 5 ist diese Anschlussfahne 13 mit dem Gehäusedeckel 4 des Motorgehäuses 2 elektrisch leitend kontaktiert. Das Anschlussende 19b des Strombahnabschnittes 19 stellt zwei Anschluss- oder Kontaktstellen 23a und 23b zur Kontaktierung des Kondensators 14 einerseits bzw. der Leitung 3a andererseits bereit. Das Anschlussende 20b des anderen Strombahnabschnittes 20 stellt eine Kontaktfläche 23c für die Entstördrossel 10 gemäß Fig. 3 bereit.

Das Sicherungsmodul 12 umfasst des Weiteren eine Kontaktfeder 24 mit einem ersten Kontaktarm 24a und mit einem zweiten Kontaktarm 24b. Beide Kontaktarme 24a und 24b weisen einen im Wesentlichen U-förmigen Basisabschnitt mit jeweils zwei über eine mittlere Fixierplatte 25a, 25b zueinander beabstandeten Fixierlaschen 26a bzw. 26b auf. Die Fixierlaschenpaare 26a und 26b korrespondieren mit den Rastausnehmungen 19a und 20a der Strombahnabschnitte 19 bzw. 20 innerhalb der fensterartigen Trägeröffnung 22 des Kunststoffträgers 18.

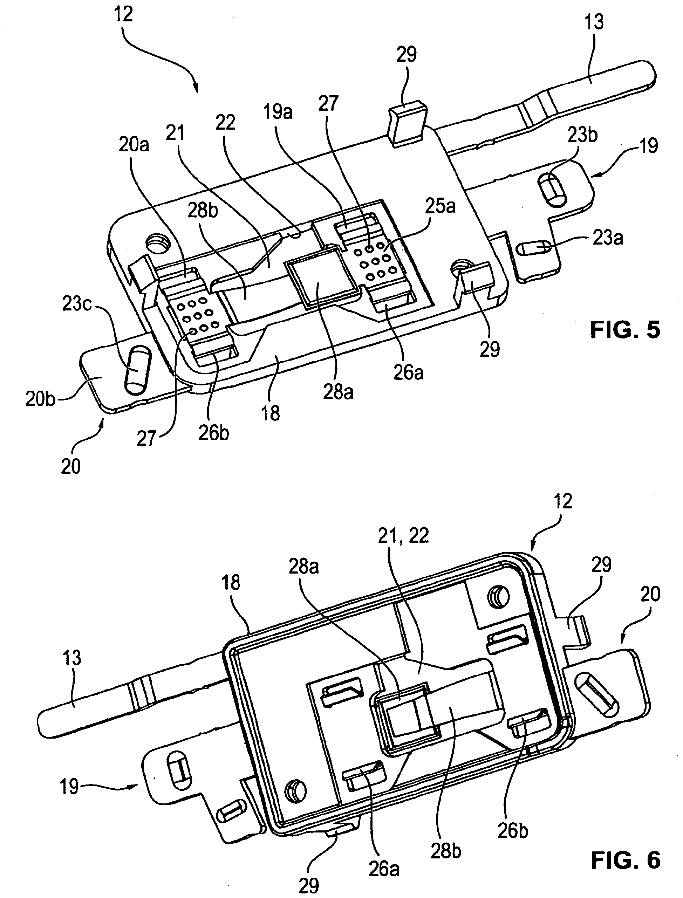

Den verasteten Zustand der Kontaktarme 24a, 24b mit den jeweiligen Strombahnabschnitten 19 bzw. 20 zeigen die Figuren 5 und 6 in einer Draufsicht bzw. in einer Unteransicht. Im zusammengebauten Zustand des Sicherungsmoduls 12 sind die Kontaktarme 24a, 24b zusätzlich mit den jeweiligen Strombahnabschnitten 19 bzw. 20 verlötet. Zur Entgasung während des Lötvorgangs sind in den jeweiligen Basisabschnitt und dort in die mittleren Fixierplatten 25a bzw. 25b eine Anzahl von Öffnungen 27 eingebracht, die in Fig. 5 vergleichsweise deutlich sichtbar sind.

Im Gegensatz zu den Basisabschnitten der Kontaktarme 24a bzw. 24b, die praktisch die Fixierenden der Kontaktarme 24a, 24b darstellen, sind die Federfreienden 28a, 28b der Kontaktarme 24a bzw. 24b unterschiedlich ausgestaltet. So weist der Kontaktarm 24b eine abgekröpfte Federzunge als Federende 28b auf, während das Federende 28b des Kontaktarms 24b muldenartig ausgestaltet ist.

Wie aus den Figuren 5 und 6 ersichtlich ist, liegt das als Federzunge ausgebildete Federende 28b der Kontaktfeder 24 unter Federvorspannung in dem muldenartigen Federende 28a des anderen Kontaktarms 24a der Kontaktfeder 24 ein und ist dort mit einer definierten Lotmenge verlötet. Im Auslösefall des Sicherungsmoduls kann das unter Federvorspannung stehende Federende 28b der Kontaktfeder 24 bei geöffneter Lotverbindung aufgrund der fensterartigen Trägeröffnung 22 frei ausfedern.

Die vorzugsweise aus Kupferberyllium bestehende Kontaktfeder 24 ist geeigneterweise mit einer galvanischen Sperrschicht, vorzugsweise mit Nickel, beschichtet. Die derart beschichtete und aus Kupferberyllium bestehende Kontaktfeder 24 ist geeigneterweise zusätzlich verzinnt.

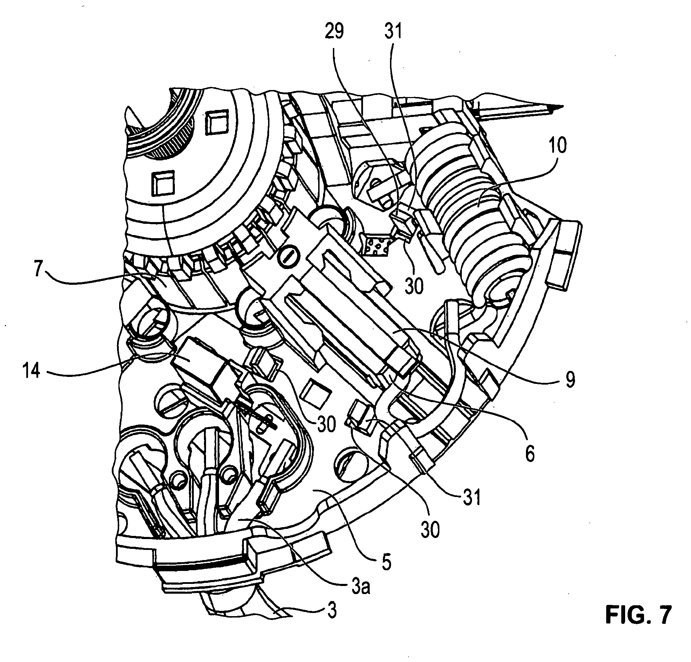

An den Kunststoffträger 18 des Sicherungsmoduls 12 sind eine Anzahl von im Ausführungsbeispiel drei Rasthaken 29 angeformt, die aus der Ebene des Kunststoffträgers 18 und der Strombahnabschnitte 19, 20 im Wesentlichen senkrecht herausragen. Mittels dieser Rasthaken 29 erfolgt eine einfache und zuverlässige Befestigung des Sicherungsmoduls 12 im Bürstenträger 5, wie dies aus Fig. 7 ersichtlich ist. Der Bürstenträger 5 weist hierzu korrespondierende Rastausnehmungen 30 auf, die mit Rastdomen 31 versehen sind, die im dargestellten Rastzustand von den Rasthaken 29 hinter- oder übergriffen sind.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

**Bezugszeichenliste**

| | | | |
|---|---|---|---|
| 1 | Antrieb/Elektromotor | 19 | Strombahnabschnitt |
| 2 | Motorgehäuse | 19a | Rastöffnung |
| 3 | Versorgungskabel | 19b | Anschlussende |
| 3a-3c | Leitung | 20 | Strombahnabschnitt |
| 4 | Gehäusedeckel | 20a | Rastöffnung |
| 5 | Bürstenträger | 20b | Anschlussende |
| 6 | Bürste | 21 | Unterbrechungsstelle |
| 7 | Kommutator | 22 | Trägeröffnung |
| 8 | Federelement | 23a-c | Anschluss-/Kontaktstelle |
| 9 | Bürstenköcher | 24 | Kontaktfeder |
| 10, 11 | Entstördrossel | 24a,b | Kontaktarm |
| 12 | Thermosicherung/ Sicherungsmodul | 25a,b | Fixierplatte |
| | | 26a,b | Fixierlasche |
| 13 | Anschlussfahne | 27 | Öffnung |
| 14 | Kondensator | 28a | Federende/-zunge |
| 15 | Stromschiene | 28b | Federende |
| 16 | Widerstandsgehäuse | 29 | Rasthaken |
| 17 | Stromschiene | 30 | Rastausnehmung |
| 18 | Kunststoffträger | 31 | Rastdom |

## Patentansprüche

1. Elektromotor (1) zum Antrieb einer Kraftfahrzeugkomponente, insbesondere Lüftermotor zur Kühlwasserkühlung, mit in einem Motorgehäuse (2) einem Rotor mit einem Kommutator (7), an dem mindestens eine Bürste (6) kontaktierend anliegt, und mit einer Thermosicherung (12) mit einer aus zwei Kontaktarmen (24a, 24b) mit jeweils einem Fixierende (25a, 25b) und einem Federende (28a, 28b) gebildeten Kontaktfeder (24), wobei die Fixierenden (25a, 25b) mit jeweils einem Strombahnabschnitt (19, 20) kontaktiert sind, zwischen denen eine Unterbrechungsstelle (21) gebildet ist, und wobei die Federenden (28a, 28b) über eine Lotverbindung unter Federvorspannung miteinander kontaktiert sind,
**dadurch gekennzeichnet,**
- **dass** eine als Sicherungsmodul ausgebildete Thermosicherung (12) mit einem Kunststoffträger (18) vorgesehen ist, in den die Strombahnabschnitte (19, 20) derart teilweise eingebettet sind, dass einerseits die Kontaktfeder (24) in einer fensterartigen Trägeröffnung (22) einliegen, und dass andererseits Anschlussenden (19b, 20b) der Strombahnabschnitte (19, 20) aus dem Kunststoffträger (18) herausragen, und
- **dass** die Kontaktarme (24a, 24b) der Kontaktfeder (24) jeweils einen im Wesentlichen U-förmigen Basisabschnitt mit zwei über eine mittlere Fixierplatte (25a, 25b) zueinander beabstandeten Fixierlaschen (26a, 26b) aufweisen, wobei in die Fixierplatte (25a, 25b) eine Anzahl von Öffnungen (27) zum Durchtritt von Löt oder Schweißmaterial zum jeweils zugeordneten Strombahnabschnitt (19, 20) eingebracht sind.

2. Elektromotor (1) nach Anspruch 1,
**dadurch gekennzeichnet,**
**dass** die Anschlussenden (19b, 20b) der Strombahnabschnitte (19, 20) zur Herstellung einer Löt- oder Schweißverbindung mit den Motorstrom führenden Bauteilen (3a, 10, 14) ausgeführt sind.

3. Elektromotor (1) nach Anspruch 1 oder 2,
**dadurch gekennzeichnet,**
**dass** ein erstes der Anschlussenden (19b) dazu vorgesehen und eingerichtet ist, im Einbauzustand des Sicherungsmoduls (12) mit einer ersten Leiterader (3a) eines den Motorstrom führenden Versorgungskabels (3) direkt kontaktiert zu werden.

4. Elektromotor (1) nach Anspruch 3,
**dadurch gekennzeichnet,**
**dass** das erste Anschlussende (19b) im Einbauzustand des Sicherungsmoduls (12) mit einem ersten Entstörelement (14), insbesondere mit einem Anschlusspin eines Kondensators, direkt kontaktiert ist.

5. Elektromotor (1) nach einem der Ansprüche 1 bis 4,
**dadurch gekennzeichnet,**
**dass** einer der Strombahnabschnitte (19) eine aus dem Kunststoffträger (18) herausragende Anschlussfahne (13) aufweist, die dazu vorgesehen und eingerichtet ist, eine direkte Masseanbindung zur Gehäusemasse, insbesondere mit einem Gehäusedeckel (4) des Motorgehäuses (2), herzustellen.

6. Elektromotor (1) nach einem der Ansprüche 1 bis 5,
**dadurch gekennzeichnet,**
**dass** ein zweites der Anschlussenden (20b) dazu vorgesehen und eingerichtet ist, im Einbauzustand des Sicherungsmoduls (12) mit einem zweiten Entstörelement, insbesondere mit einem Wicklungsende einer Drosselspule (10), direkt kontaktiert zu werden.

7. Elektromotor (1) nach einem der Ansprüche 1 bis 6,
**dadurch gekennzeichnet,**
**dass** an den Kunststoffträger (18) eine Anzahl von, vorzugsweise zwei oder drei, Rastelemente (29), vorzugsweise Rasthaken angeformt sind, die dazu vorgesehen und eingerichtet sind, mit korrespondierenden Rastelementen (19a, 20a), vorzugsweise Rastausnehmungen, eines aus Isoliermaterial bestehenden Bürstenträgers (5) zusammenzuwirken und das Sicherungsmodul (12) innerhalb des Motorgehäuses (2) zu fixieren.

8. Elektromotor (1) nach einem der Ansprüche 1 bis 7,
**dadurch gekennzeichnet,**
**dass** das Sicherungsmodul (12) in der Nähe, vorzugsweise ober- oder unterhalb, der Bürste (6) angeordnet ist.

9. Elektromotor (1) nach Anspruch 8,
**dadurch gekennzeichnet,**
**dass** das Sicherungsmodul (12) im Bürstenträger (5) derart angeordnet ist, dass die Bürste (6) unter- bzw. oberhalb der Unterbrechungsstelle (21) und/oder der Lotverbindung der Federenden (28a, 28b) der Kontaktfeder (24) des Sicherungsmoduls (12) angeordnet ist.

10. Elektromotor (1) nach einem der Ansprüche 1 bis 9,
**dadurch gekennzeichnet,**
**dass** die fensterartige Trägeröffnung (22) des Kunststoffträgers (18) derart ausgestaltet ist, dass das unter Federvorspannung stehende Federende (28b) der Kontaktfeder (24) bei geöffneter Lotverbindung frei ausfedert.

11. Elektromotor (1) nach Anspruch 10,
**dadurch gekennzeichnet,**
**dass** die Fixierlaschen (26a, 26b) dazu ausgebildet sind, mit Öffnungen (19a, 20a) im jeweiligen Strombahnabschnitt (19, 20) zur Herstellung einer Schnapp- oder Rastverbindung zu korrespondieren.

## Claims

1. Electric motor (1) for driving a motor vehicle component, in particular fan motor for cooling cooling water, having a rotor in a motor housing (2), said rotor having a commutator (7), on which at least one brush (6) abuts with contact, and having a thermal fuse (12) having a contact spring (24) formed of two contact arms (24a, 24b) each having a fixing end (25a, 25b) and a spring end (28a, 28b), wherein the fixing ends (25a, 25b) are each contacted by a current path section (19, 20), between which a breakpoint (21) is formed, and wherein the spring ends (28a, 28b) are in contact with each other under spring pre-tension via a soldered connection,
**characterised in that**
- a thermal fuse (12) formed as a fuse module is provided with a plastic support (18) in which the current path sections (19, 20) are partially embedded in such a way that, on one side, the contact spring (24) lies in a window-like support opening (22), and on the other side, connection ends (19b, 20b) of the current path sections (19, 20) protrude from the plastic support (18), and
- the contact arms (24a, 24b) of the contact spring (24) each have a substantially U-shaped base section having two fixing tabs (26a, 26b) which are spaced apart from each other by means of a middle fixing plate (25a, 25b), wherein a number of openings (27) are introduced into the fixing plate (25a, 25b) to allow solder or welding material to pass through to the respectively allocated current path section (19,20).

2. Electric motor (1) according to claim 1,
**characterised in that**
the connection ends (19b, 20b) of the current path sections (19, 20) are designed for the production of a soldered or welded connection to the components (3 a, 10, 14) guiding the motor current.

3. Electric motor (1) according to claim 1 or 2,
**characterised in that**
a first of the connection ends (19b) is provided and established to be directly contacted by a first conductor strand (3 a) of a supply cable (3) guiding the motor current in the installed state of the fuse module (12).

4. Electric motor (1) according to claim 3,
**characterised in that**
the first connection end (19b) is directly contacted by a first anti-interference element (14), in particular by a connection pin of a capacitor, in the installed state of the fuse module (12).

5. Electric motor (1) according to one of claims 1 to 4,
**characterised in that**
one of the current path sections (19) has a connecting lug (13) which protrudes from the plastic support (18), said connecting lug (13) being provided and established to produce a direct ground connection to the housing ground, in particular to a housing cover (4) of the motor housing (2).

6. Electric motor (1) according to one of claims 1 to 5,
**characterised in that**
a second of the connection ends (20b) is provided and established to be directly contacted by a second anti-interference element, in particular by a winding end of an inductor (10), in the installed state of the fuse module (12).

7. Electric motor (1) according to one of claims 1 to 6,
**characterised in that**
a number, preferably two or three, of latching elements (29), preferably latching hooks, are formed on the plastic support (18), said latching elements (29) being provided and established to interact with corresponding latching elements (19a, 20a), preferably latching recesses, of a brush support (5) consisting of an insulating material, and to fix the fuse module (12) inside the motor housing (2).

8. Electric motor (1) according to one of claims 1 to 7,
**characterised in that**
the fuse module (12) is arranged near the brush (6), preferably above or below the brush (6).

9. Electric motor (1) according to claim 8,
**characterised in that**
the fuse module (12) is arranged in the brush support (5) in such a way that the brush (6) is arranged above or below the breakpoint (21) and/or the soldered connection of the spring ends (28a, 28b) of the contact spring (24) of the fuse module (12).

10. Electric motor (1) according to one of claims 1 to 9,
**characterised in that**
the window-like support opening (22) of the plastic support (18) is designed in such a way that the spring end (28b) of the contact spring (24) under spring pre-tension freely expands in the event of an open soldered connection.

11. Electric motor (1) according to claim 10,
**characterised in that**
the fixing tabs (26a, 26b) are formed to correspond to openings (19a, 20a) in the respective current path section (19, 20) for the production of a snap or latching connection.

## Revendications

1. Moteur électrique (1) destiné à entraîner une composante de véhicule, en particulier moteur de ventilateur pour le refroidissement de l'eau de refroidissement, avec dans un bâti-moteur (2) un rotor avec un commutateur (7) contre lequel au moins une brosse (6) repose avec contact, et avec une protection thermique (12) avec un ressort de contact (24) formé de deux bras de contact (24a, 24b) avec respectivement une extrémité de fixation (25a, 25b) et une extrémité de ressort (28a, 28b), dans lequel les extrémités de fixation (25a, 25b) sont mises en contact avec respectivement une partie de bande électrique (19, 20), entre lesquelles un emplacement d'interruption (21) est formé, et dans lequel les extrémités de ressort (28a, 28b) sont mises en contact l'une avec l'autre via une liaison par brasage sous précontrainte de ressort,
**caractérisé en ce que**
- une protection thermique (12) formée en tant que module de protection est prévue avec un support en matière synthétique (18) dans lequel les parties de bande électrique (19, 20) sont partiellement intégrées de telle sorte que d'un côté le ressort de contact (24) sont logés dans une ouverture de support (22) en forme de fenêtre et que d'un autre côté des extrémités de liaison (19b, 20b) des parties de bande électrique (19, 20) font saillie depuis le support en matière synthétique (18), et
- les bras de contact (24a, 24b) du ressort de contact (24) présentent respectivement une partie de base essentiellement en forme de U avec deux pattes de fixation (26a, 26b) mutuellement espacées par-dessus une plaque de fixation (25a, 25b) centrale, dans lequel dans la plaque de fixation (25a, 25b) un certain nombre d'ouvertures (27) est incorporé pour assurer le passage de matériel de brasage et de soudure jusqu'à la partie de bande électrique (19, 20) respectivement assignée.

2. Moteur électrique (1) selon la revendication 1,
**caractérisé en ce que**
les extrémités de liaison (19b, 20b) des parties de bande électrique (19, 20) sont réalisées pour la création d'une liaison par brasage ou par soudure avec les composants (3a, 10, 14) conduisant le courant du moteur.

3. Moteur électrique (1) selon la revendication 1 ou 2,
**caractérisé en ce que**
une première des extrémités de liaison (19b) est prévue et aménagée pour, à l'état monté du module de protection (12), être directement mise en contact avec un premier brin conducteur (3a) d'un câble d'alimentation (3) conduisant le courant du moteur.

4. Moteur électrique (1) selon la revendication 3,
**caractérisé en ce que**
la première extrémité de liaison (19b), à l'état monté du module de protection (12), est directement mise en contact avec un premier élément antiparasitage (14), en particulier avec une broche de liaison d'un condensateur.

5. Moteur électrique (1) selon l'une quelconque des revendications 1 à 4,
**caractérisé en ce que**
l'une des parties de bande électrique (19) présente une barrette de liaison (13) faisant saillie depuis le support en matière synthétique (18) et qui est prévue et aménagée pour créer une connexion à la terre à la masse du bâti, en particulier avec un couvercle de bâti (4) du bâti-moteur (2).

6. Moteur électrique (1) selon l'une quelconque des revendications 1 à 5,
**caractérisé en ce que**
une seconde des extrémités de liaison (20b) est prévue et aménagée pour, à l'état monté du module de protection (12), être directement mise en contact avec un second élément antiparasitage, en particulier avec une extrémité d'enroulement d'une bobine d'inductance (10).

7. Moteur électrique (1) selon l'une quelconque des revendications 1 à 6,
**caractérisé en ce que**
au niveau du support en matière synthétique (18), un certain nombre de, de préférence deux ou trois, éléments d'encliquetage (29), de préférence des crochets d'encliquetage sont formés qui sont prévus et aménagés pour coopérer avec des éléments d'encliquetage (19a, 20a) correspondants, de préférence des évidements d'encliquetage, d'un porte-brosse (5) composé de matériau isolant, et fixer le module de protection (12) à l'intérieur du bâti-moteur (2).

8. Moteur électrique (1) selon l'une quelconque des revendications 1 à 7,
**caractérisé en ce que**
le module de protection (12) est agencé à proximité, de préférence au-dessus ou au-dessous de la brosse (6).

9. Moteur électrique (1) selon la revendication 8,
**caractérisé en ce que**
le module de protection (12) est agencé dans le porte-brosse (5) de telle sorte que la brosse (6) est agencée au-dessus ou au-dessous de l'emplacement d'interruption (21) et/ou de la liaison par brasage des extrémités de ressort (28a, 28b) du ressort de contact (24) du module de protection (12).

10. Moteur électrique (1) selon l'une quelconque des revendications 1 à 9,
**caractérisé en ce que**
l'ouverture de support (22) en forme de fenêtre du support en matière synthétique (18) est conçu de telle sorte que l'extrémité de ressort (28b), placée sous précontrainte de ressort, du ressort de contact (24) se détend librement si une liaison par brasage est ouverte.

11. Moteur électrique (1) selon la revendication 10,
**caractérisé en ce que**
les pattes de fixation (26a, 26b) sont formées pour, avec des ouvertures (19a, 20a) dans la partie de bande électrique (19, 20), correspondre à la création d'une liaison d'enclenchement ou d'encliquetage.
